# EUROPEAN PATENT SPECIFICATION

(11) **EP 2 073 485 B1**
(45) Date of publication and mention of the grant of the patent: **13.06.2018**
(21) Application number: 07150204.1
(22) Date of filing: 20.12.2007
(51) Int. Cl.: H04L 12/18, H04L 29/06, H04L 29/12

(54) **Providing a download service in communications system**
Bereitstellung eines Download-Dienstes in einem Kommunikationssystem
Fourniture d'un service de téléchargement dans un système de communication

(43) Date of publication of application: 24.06.2009
(73) Proprietor: Nokia Solutions and Networks Oy, 02610 Espoo (FI)
(72) Inventor: Jerichow, Anja, 81735, München (DE); Nösekabel, Holger, 10115, Berlin (DE)
(74) Representative: Borgström, Markus

(56) References cited:
- US-A1- 2007 005 771
- US-A1- 2007 147 411
- LEE J Y B ET AL: "DESIGN, PERFORMANCE ANALYSIS, AND IMPLEMENTATION OF A SUPER-SCALAR VIDEO-ON-DEMAND SYSTEM" IEEE TRANSACTIONS ON CIRCUITS AND SYSTEMS FOR VIDEO TECHNOLOGY, IEEE SERVICE CENTER, PISCATAWAY, NJ, US, vol. 12, no. 11, November 2002 (2002-11), pages 983-997, XP001133429 ISSN: 1051-8215
- "3rd Generation Partnership Project; Technical Specification Group Services and System Aspects; Multimedia Broadcast/Multicast Service (MBMS); Architecture and functional description (Release 6)", 3GPP DRAFT; 23846-610, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 13 January 2003 (2003-01-13), XP050909028, Retrieved from the Internet: URL:http://www.3gpp.org/ftp/Specs/2014-12/ Rel-6/23_series/ [retrieved on 2003-01-13]

## Description

### FIELD OF THE INVENTION

The invention relates to providing a download service to user terminals in a communications system.

### BACKGROUND OF THE INVENTION

3GPP MBMS (third generation partnership project multimedia broadcast multicast service), 3GPP2 BCMCS (broadcast multicast service), and DVB CBMS/IPDC (digital video broadcasting convergence of broadcast and mobile services/internet protocol datacast) provide an ability to transfer multimedia contents over mobile networks. This is achieved by introducing broadcasting into mobile communications networks. In unicasting, data is transmitted to a single, dedicated receiver. In broadcasting, content is sent out to an unlimited and unknown number of users, as e.g. in terrestrial and satellite based television transmission.

**The publication** LEE J Y B ET AL: "DESIGN, PERFORMANCE ANALYSIS, AND IMPLEMENTATION OF A SUPER-SCALAR VIDEO-ON-DEMAND SYSTEM" IEEE TRANSACTIONS ON CIRCUITS AND SYSTEMS FOR VIDEO TECHNOLOGY, IEEE SERVICE CENTER, PISCATAWAY, NJ, US, vol. 12, no. 11, November 2002 (2002-11), pages 983-997, XP001133429 ISSN: 1051-8215 **presents an architecture which combines the use of static multicast, dynamic multicast, and intelligent client-side caching to vastly reduce server and network resource requirement, proposes methods to support interactive playback controls without the need for additional server or client resources, and derives an approximate performance model to relate the startup latency with other system parameters.**

**The publication** US 2007/005771 A1 (COLLET JEAN-LUC [FR] ET AL) 4 January 2007 **(2007-01-04) describes a method and computer system for managing bandwidth in a content on demand service provided by a service provider to users. A request is received from a user to receive the content. If it is ascertained that a total number of users requesting the content within a predetermined time period is below a first specified threshold, then the user is connected to a unicast stream of the content. If it is ascertained that a total number of users requesting the content within a predetermined time period is not below a first specified threshold, then the user is connected to a first multicast stream of the content.**

**The publication** US 2007/147411 A1 (BIJWAARD DENNIS [NL] ET AL) 28 June 2007 **(2007-06-28) includes methods for converting between a plurality of unicast sessions and a multicast session. A method for converting from unicast sessions to a multicast session includes receiving a request for establishing a unicast session for delivering content to a first client device, generating a multicast session establishment message adapted for establishing a multicast session with the client device for delivering the content to the client device, and generating at least one multicast session join message for the other client devices, the at least one multicast session join message adapted for enabling the other client devices to join the multicast session.**

When content is broadcast to a large group of recipients, the system may support immediate interactivity (e.g. voting, betting, ordering) in particular when something is advertised. For example, a user may decide to buy a song s/he is listening to, or request a license for a file that was pushed as a download broadcast to an end device. In these cases, the user needs to connect to an application server, and make a request. The requested content may be free of charge, but it is still necessary to download it, and optionally to protect the content with digital rights management (DRM) on the server side. In the latter case, an additional license may be requested by the end-user device from a rights issuer.

In prior art systems, user terminals receive download data as unicast, even if the requested data is identical between several user terminals ordering at (nearly) the same time, as is often the case in above cases. Unicast refers to a dedicated connection between a delivering application server and the end-user device. Unicast connections are necessary since content requests are handled while being issued, i.e. the content files are delivered immediately.

A disadvantage of the above system is that it is inefficient to send identical content to each requesting party separately. Unicast connections do not scale well and, as a result, are costly in terms of network capacity and money. Scalability is a concern particularly when large response rates are anticipated or desired, like in mobile marketing scenarios.

Another solution is to broadcast (free or DRM protected) content, have the end-user device store it locally, and, if necessary, acquire the license on demand. For example, in an OMA BCAST solution "activation of prior downloaded broadcast service content" which is protected from unauthorized consumption, the content provider offers digital content within a broadcast service, e.g. the latest top 10 music charts. The user terminal receives the content and stores it. If the end-user wishes to consume the content, or only parts of it, s/he has to purchase rights (a license) for the content. The rights are delivered to the user terminal, enabling consumption of the stored content. If the end-user decides not to consume the content, it may be deleted from the user terminal.

A drawback of the above solution is that the content is broadcast although it may not be of interest to the user. Thus, transmission resources are not used efficiently in the system. In addition, storing content locally on the user device increases memory requirements of the end-user devices, such as mobile devices, especially if multiple services are delivered in this way. For example, if the solution is applied to a mobile marketing scenario, it is undesirable for the users to spend their local storage space for advertising.

Multicasting refers to unidirectional transmission of data from a single sender to multiple, specific receivers. In multicasting, content is sent out to devices that have previously joined a dedicated multicast group. 3GPP MBMS, 3GPP2 BCMCS, DVB-H (DVB-handheld) CBMS, and OMA BCAST (open mobile alliance broadcast), have specified a solution for broadcast/multicast delivery of content. However, in such a case, a multicast group, once formed, stays as a group for a distinct period (e.g. in the case of a pay per time subscription).

### BRIEF DESCRIPTION OF THE INVENTION

An object of the present invention is thus to provide a method, system, and network node for implementing the method so as to solve the above problems. Objects of the invention are achieved by a method and an arrangement which are characterized by what is stated in the independent claims. Preferred embodiments are disclosed in the dependent claims.

The invention is based on an idea of introducing a broadcast/multicast service in a communications system. The invention involves providing a download service in a communications system, the method comprising broadcasting content to user terminals. During broadcasting, content requests may be received from the user terminals. If a content request received from a first user terminal has at least one common feature with a content request received from a second user terminal, and the content requests are received within a predetermined time period, a multicast subgroup having a multicast address is defined. Common parts of the requested content are multicast to the user terminals included in the multicast subgroup, by utilizing the multicast address.

An advantage of the method and arrangement of the invention is that when content is broadcast/multicast to a large group of recipients the service may support interactivity (e.g. voting, betting, or ordering) immediately without scalability issues e.g. when something is advertised. The invention also enables broadcast/multicast to be used efficiently in order to serve a subgroup of broadcast users requesting the same data within a short time period. A further advantage of the invention is that it enables bandwidth to be saved and efficiency to be increased, since by using multicast a pool of requests can be served at once.

### BRIEF DESCRIPTION OF THE DRAWINGS

In the following the invention will be described in greater detail by means of preferred embodiments with reference to the attached drawings, in which
Figures 1a), 1b), 1c) illustrate a communications system according to an embodiment of the present solution;
Figure 2 illustrates signalling according to an embodiment of the present solution;
Figure 3 illustrates functioning of a network element according to an embodiment of the present solution;
Figure 4 illustrates functioning of a broadcast multicast service centre according to an embodiment of the present solution;
Figure 5 is a graphical representation illustrating multicasting vs. unicasting.

### DETAILED DESCRIPTION OF THE INVENTION

An OMA BCAST enabler defines an end-to-end framework beyond physical layers for mobile broadcast services. The enabler is bearer-independent such that it is useful in a diverse and heterogeneous infrastructure. For example, it applies to MBMS, BCMCS, or CBMS bearer technologies. Mobile broadcast services may be built on mobile network systems providing bi-directional connections, and/or on digital broadcast systems providing unidirectional broadcast. Thus the mobile broadcast services enable distribution of rich, interactive, and bandwidth consuming media content to large mobile audiences. An OMA DRM v2.0 enabler does not involve one-to-one rights provisioning for broadcast/multicast. However, in a broadcast environment, service and content protection measures are common business models and thereby necessary. Therefore, several measures have been defined in a subsequently developed OMA BCAST enabler specification, i.e. in the parts "service and content protection" (SPCP) and "broadcast extensions for DRM" (XBS), an extension to DRM v2.0 for broadcast, which allow usage of broadcast rights objects (BCRO). OMA XBS specification, section 10.1, defines a subscriber group as a set of devices that share a group address along with cryptographic key material and algorithms that allow any subset of this group to be associated with a cryptographic key. A subscriber group can be cryptographically secure, which means that it has the additional property that any user device from the group cannot deduce distinct cryptographic keys for subsets that exclude the device. If the subscriber group addressing is cryptographically secure, it can be used effectively to distribute a BCRO to such a subset, where the content encryption keys in BCRO are protected with the distinct key associated with the particular subset. The XBS specification applies to the so-called DRM profile as described in SPCP. Another option for delivering usage rules for multicast/broadcast content is described within SPCP using a smart card profile. This solution uses a smart card as a control mechanism for accessing content.

Digital rights management (DRM) enables distribution of rights for the consumption of digital content in a controlled manner. In particular in broadcast/multicast systems, content distribution is often carried out together with conditional access measures. A DRM system defines fine-grained rules for the consumption of content after reception. The content is distributed and consumed on authenticated devices, based on user rights expressed by the content providers. Typically, the content is encrypted with an encryption key, and can only be decrypted by a user device that has gained sufficient rights to consume the content.

DRM content format (DCF) is used to package and protect discrete media (that is, ring tones, applications, images, etc). This discrete media profile allows wrapping of content in an envelope (DCF). That content may or may not be encrypted and then placed as a single content object in the DCF's internal structure and layout. Packetized DRM content format (PDCF) is used to protect continuous media (for example, audio and video). Continuous media is protected in a separate profile because it is packetized, and thus the profile is called the packetized DCF (PDCF). Applications that read and parse continuous media are meant to work on the file on a packet-by-packet basis. To facilitate the playback of protected continuous media, the storage format is structured in such a way that the packets are individually protected. This structurally aware packetization is also required in order to stream continuous media. An OMA DRM-compliant streaming server should be able to understand the content format's structure in order to break the content into headers and packets that can be delivered to a client that understands the content format.

The present solution involves forming an ad hoc subgroup to address a group of requesting user terminals interested in a certain service or content. The present solution enables establishment of a temporary multicast subgroup based on similar content requests. In the present solution, a service provider, such as a mobile radio station, gathers content requests (also referred to as service requests and/or purchase requests) transmitted by user terminals, compares them, and if enough similarities exist between them, and if their timing is appropriate (i.e. close to one another; received within a specific pooling period), an ad hoc multicast subgroup is formed, and the requested content is multicast to the members of the ad hoc multicast subgroup. After that, the ad hoc subgroup is deleted (information on the ad hoc subgroup may be stored e.g. for charging purposes).

In the following, embodiments of the present solution will be described with reference to a cellular or wireless communications system, such as a third generation (or beyond 3G) mobile communications system or WLAN (wireless local area network). However, the solution is not meant to be restricted to these embodiments. The present solution is applicable to any network node, corresponding component(s), and/or to any communication system or any combination of different communication systems capable of providing user terminals with a broadcast/multicast service. The communication system may be a fixed communication system or a wireless communication system or a communication system utilizing both fixed networks and wireless networks. The protocols used, the specifications of communication systems and network nodes, especially in mobile and wireless communication, develop rapidly. Such development may require extra changes to an embodiment. Therefore, all words and expressions should be interpreted broadly and they are intended to illustrate, not to restrict, the embodiment. The relevant inventive aspect is the functionality concerned, not the network element or equipment where it is executed.

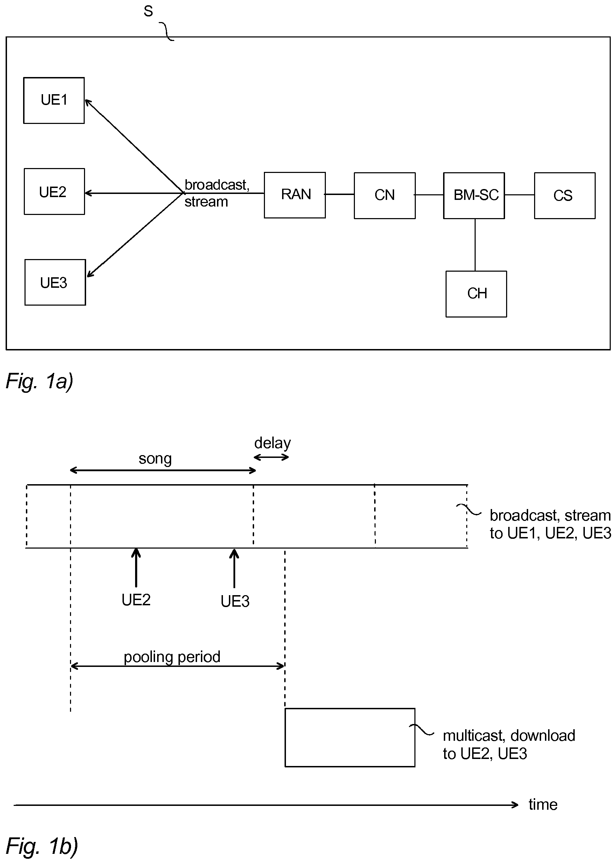

Figures 1a), 1b), 1c) illustrate a communications system S according to an embodiment of the present solution. The system S comprises at least one user terminal UE1, UE2, UE3 that may be e.g. a mobile or wireless terminal, such as a mobile phone (mobile station), a personal digital assistant (PDA), a game console, a laptop or the like, capable of operating in a broadcast/multicast network environment, such as a mobile broadcast radio network. The system S further comprises a radio access network RAN, such as a radio access network of a cellular network, or a wireless local area network (WLAN). The system S also comprises a core network CN, such as a core network of a cellular network. The access network RAN and the core network are operated by a network operator, for providing network access to the user terminals UE1, UE2, UE3. The system S further includes a broadcast multicast service centre BM-SC operated by a service operator. The broadcast multicast service centre BM-SC may be connected to a content source CS, and to a charging solution CH. The user terminals UE1, UE2, UE3 are able to communicate with the broadcast multicast service centre BM-SC, via the core network CN (including e.g. a mobile switching centre) and the radio access network RAN (including e.g. a base station and/or a radio network controller), when the user terminal UE1, UE2, UE3 is in an area of the radio access network RAN. Figures 1a), 1b), 1c) show a simplified version of a mobile broadcasting network structure, which only illustrate the components necessary for illustrating the present solution, even though those skilled in the art naturally know that a general communications system also comprises other functions and structures, which do not have to be described in more detail herein. The network nodes broadcast multicast service centre BM-SC, content source CS, and/or charging solution CH may include any network element operated by a service operator in a broadcast/multicast network, such as an IP multimedia subsystem (IMS, e.g. a home subscriber server (HSS) for service authentication), operations/business support systems (OSS/BSS), a streaming server, or a database. Although each network node or function RAN, CN, BM-SC, CH, CS has been depicted as one entity, different modules and memory may be implemented in one or more physical or logical entities.

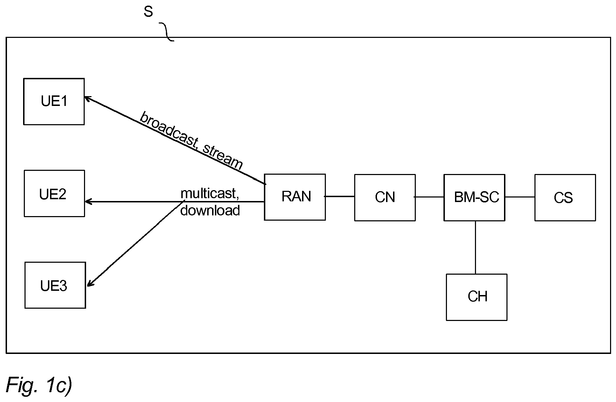

In the suggested implementation of multicast content delivery with a pooling concept shown in Figures 1a), 1b), 1c), content requests are pooled and the requested content is encrypted (if applicable, e.g. if the content is not free, should not be retransmitted by users, or has other restrictions), and then transmitted as multicast. As shown in Figure 1a), user terminals UE1, UE2, UE3 (and eventual other users not represented in the figure) are able to receive a broadcast signal (i.e. a broadcast stream). During the broadcast, e.g. users of UE2 and UE3 may fancy a certain song and request to download it, as illustrated in Figure 1b). Thus, UE2 and UE3 are able to form an ad hoc group that - after a pooling period - may receive download content as multicast, as illustrated in Figure 1c).

In the graphical representation shown in Figures 1a), 1b), 1c), it is assumed that subscribers request the same content nearly at the same time, i.e. within the pooling period. In the example, a mobile radio service (such as a broadcast multicast service centre BM-SC) delivers a continuous audio stream as a broadcast to the user devices UE1, UE2, UE3. The user terminals UE1, UE2, UE3 have an option to purchase a currently playing song at any time by transmitting a content request to the network. In the situation shown in Figure 1b), only user terminals UE2 and UE3 request the content, but also other user terminals receiving the broadcast stream may request the content although not shown in Figure 1b). According to the present solution, based on content requests collected during the pooling period, an ad hoc multicast group can be formed for providing the requested service to the requesting user terminals UE2, UE3. To pool the purchase requests, delivery of a corresponding music file as a download may be delayed until the current song (or other program item) has finished playing, with an eventual additional delay of approximately 30 seconds, for example. After the pooling period, the music file - which may or may not be DRM protected - is delivered as a multicast only to the requesting user terminals, i.e. in this case UE2 and UE3, but not UE1, as shown in Figure 1c). If an OMA BCAST DRM profile is applied, an OMA XBS extension defines the use of broadcast rights objects (BCRO) to deliver required licenses within the multicast. Or, in case of using the OMA BCAST smartcard profile (i.e. SC profile, another way of key management and licence delivery in OMA BCAST), a license is delivered as part of a security policy extension, which is part of the STKM/LTKM delivery in OMA BCAST. LTKM (long term key message) includes key information stored on the smart card, and it is necessary for processing of STKM (short term key message). Although not illustrated in Figure 1b), the user terminals UE2 and/or UE3 are not necessarily able to receive the broadcast stream during the time period the requested content is multicast to UE2, UE3 (but UE1 is able to receive the broadcast stream during that time period).

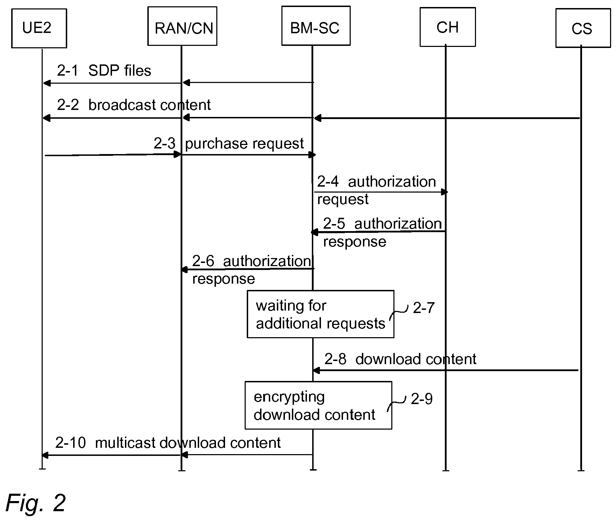

Figure 2 illustrates signalling between network entities according to an embodiment of the present solution, by using a multimedia broadcast multicast service (MBMS) as an example. Broadcast streaming content 2-2, and corresponding metadata for streaming and download content in one or more session description protocol (SDP) file(s) 2-1, are transmitted to the user terminal UE2 (for clarity reasons, only one user terminal is shown in Figure 2, but in reality there may be more than one user terminal receiving the content). The SDP files are transmitted 2-1 e.g. by a broadcast multicast service centre BM-SC, via a core network CN and a radio access network RAN. The broadcast streaming content is transmitted 2-2 e.g. by a content source CS, via the broadcast multicast service centre BM-SC, core network CN, and radio access network RAN. Prior art signalling may be utilized in the messages 2-1 and 2-2.

A purchase may be implemented by joining an MBMS multicast group, wherein the user terminal UE2 sends an internet group management protocol (IGMP) join message (also referred to as a purchase request and/or content request) to the broadcast multicast service centre BM-SC, via the radio access network RAN and the core network CN. (The join message 2-3 indicates a multicast group IP address. An application layer/interactivity protocol determines the correct IP address, e.g. picks a right SDP file at a right time during the stream). After that BM-SC transmits an authorization request message 2-4 to a charging solution CH, in order to get the user terminal UE2 authorized for the network CN/RAN. Data necessary for the IGMP join procedure was communicated to the user terminal UE2 by means of the session description protocol (SDP) file of the message 2-1. The user terminal authorization may also be utilized when generating a charging record for the song purchase. If the backend charging solution CH indicates that the user terminal UE2 is able to cover the purchase (e.g. has sufficient funds), or the content is free, the join request is granted, by transmitting an authorization granted response 2-5, 2-6 via BM-SC to the network CN/RAN, and the user terminal UE2 can be placed into a multicast group. Otherwise, the join request is denied and the user terminal UE2 cannot be placed into the multicast group (wherein an authorization denied response may be transmitted 2-5, 2-6 via BM-SC to the network CN/RAN).

In step 2-7, BM-SC is arranged to wait for eventual additional content requests from other user terminals UE1, UE3, directed to a similar content. In the message 2-8, the purchased download content is delivered, by the content source CS, to BM-SC. After a pooling delay has expired, the purchased download content is delivered 2-10 by BM-SC, via the network CN, RAN, as a file delivery over unidirectional transport (FLUTE) download to the user terminals that have successfully joined the multicast group. In step 2-9, BM-SC creates a multicast group on the basis of the multicast group IP address (i.e. multicast address), and may or may not encrypt the download content, before transmitting it towards the user terminal UE2 (and to other user terminals UE3 requesting the same content within the pooling period, although not shown in Figure 2). After the requested content has been provided to the user terminals the multicast address and/or the multicast group may be deleted. Another option is that the multicast address is stored in the network (e.g. in BM-SC).

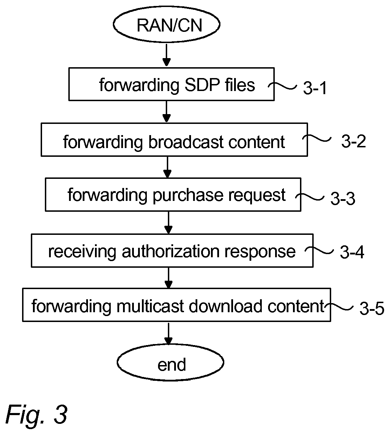

Figure 3 illustrates functioning of a radio access network RAN/core network CN according to an embodiment of the present solution. Broadcast streaming content, and corresponding metadata in a session description protocol (SDP) file, transmitted by BM-SC, are forwarded in steps 3-1, 3-2 to the user terminals UE1, UE2, UE3. An internet group management protocol (IGMP) join message (i.e. a purchase request), transmitted by the user terminal UE2, UE3, is forwarded in step 3-3 to the broadcast multicast service centre BM-SC. After that an authorization response is received 3-4 from BM-SC. If the user terminal UE2, UE3 is able to cover the purchase (e.g. has sufficient funds), or the content is free, the join request is granted, an authorization granted response is received 3-4 from BM-SC, and the user terminal UE2, UE3 can be placed into the corresponding multicast group. In step 3-5, the purchased download content is received from BM-SC, as a file delivery over unidirectional transport (FLUTE) download, and forwarded 3-5 to the user terminals UE2, UE3 that have successfully joined the multicast group. However, if the join request is denied, the user terminal is not placed in the multicast group, and an authorization denied response may be received 3-4 from BM-SC, in which case the user terminal in question is not provided with the multicast download content.

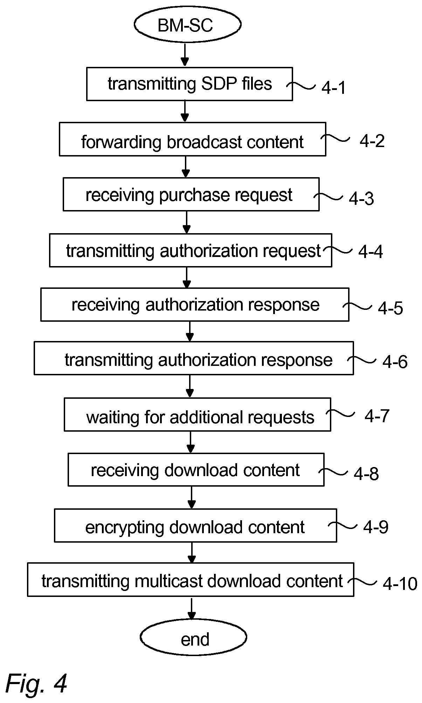

Figure 4 illustrates functioning of a broadcast multicast service centre BM-SC according to an embodiment of the present solution, by using a multimedia broadcast multicast service (MBMS) as an example. In step 4-1, metadata in a session description protocol (SDP) file, related to broadcast streaming content, is transmitted via a core network CN/radio access network RAN to user terminals UE1, UE2, UE3. In step 4-2, the broadcast streaming content is received from a content source and forwarded via the core network CN/radio access network RAN to UE1, UE2, UE3. Prior art procedures may be utilized in steps 4-1 and 4-2. In step 4-3, an Internet group management protocol (IGMP) join message, (i.e. a purchase request), is received from UE2 via the access network RAN/core network CN. After that, in step 4-4, BM-SC transmits an authorization request message to a charging solution CH in order to authorize the user terminal UE2 for the network CN, RAN. Data necessary for the IGMP join procedure is communicated to the user terminal UE2 by means of the session description protocol (SDP) file in step 4-1. If the backend charging solution CH indicates that the user terminal UE2 is able to cover the purchase (e.g. has sufficient funds), or the content is free, an authorization granted response 4-5 is received in BM-SC from CH. This means that the join request is granted and the user terminal UE2 can be placed into a multicast group. Otherwise, the join request is denied and the user terminal UE2 cannot be placed the multicast group (an authorization denied response may be received 4-5 in BM-SC from CH). In step 4-6, the authorization granted response is transmitted to CN/RAN. In step 4-7, BM-SC waits for eventual additional requests originating from other user terminals UE1, UE3. In step 4-8, the purchased download content is received from the content source CS. After a pooling delay has expired, the purchased download content is delivered 4-10 by BM-SC, via the network CN, RAN, as a file delivery over unidirectional transport (FLUTE) download to the user terminals UE2, UE3 that have successfully joined the multicast group. In step 4-9, BM-SC defines a multicast address for the multicast group and may or may not encrypt the download content, before transmitting it towards the user terminal UE2, UE3.

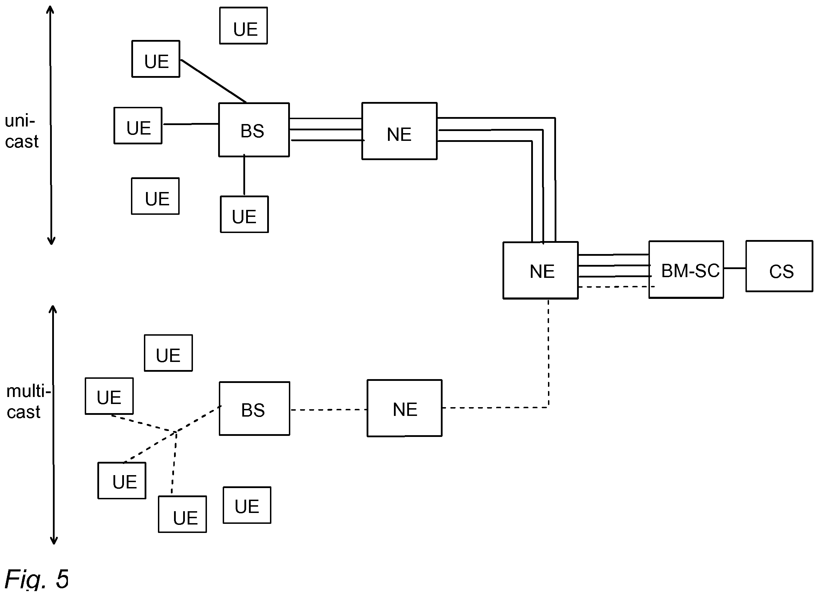

Figure 5 shows a graphical representation illustrating unicast vs. multicast, depicting the problem of scalability and illustrating capacity savings that can be achieved when content is multicast (lower half) instead of unicast (upper half). In the latter case, a dedicated connection is necessary for each receiving user terminal UE such that bandwidth requirements, especially for popular content, are increased. In contrast, multicast files can be delivered efficiently via core network elements NE and base stations BS to user terminals UE that have previously requested the content. As can be seen in Figure 5, no dedicated transmission is necessary in the network for each user terminal receiving the multicast content. In multicast, the provision of the content file to different user terminals can be handled as one unit, while in unicast the provided content file has to be handled separately (a dedicated transmission channel necessary in the network) for each user terminal UE.

While a radio service is used as an example, it should also be noted that any other live streaming service may serve the same purpose, e.g. a television program where the users may purchase ring tones. The streaming service facilitates channeling purchase orders in a relatively short timeframe, as the offer or purchasing impulse is tied to continuous media delivery. Orders received from outside the pooling period may still be delivered as unicast.

Required decryption keys for the protected content may be transmitted to the user terminal a) as multicast, by using the pooling mechanism described above, b) as unicast, by applying a domain key concept of OMA DRM 2.0, included in the data transmission, c) by using an OMA BCAST service and content protection functionality with BCRO (DRM profile), and/or d) OMA BCAST with smart card profile.

An advantage of the pooling of the content requests before delivering the content lies in leveraging the economies of scale. Instead of several unicast connections, only one multicast connection is required, thus reducing the costs of a file delivery.

In the case of free download content, such as advertising content, the total costs of a marketing campaign may be lowered by means of the present solution. If, on the other hand, the content is charged for, the margin of each sale is increasing. For a network operator, the available network capacity increases, thus allowing delivery of other services.

Another advantage of the present solution, especially in mobile marketing (i.e. mobile advertising), is an opportunity to divide users into target groups. Many users are not willing to accept mobile advertising which is not, at least to a certain degree, personalized. Fully personalized advertising delivered as unicast incurs high costs. By means of the multicast groups according to the present solution, advertising costs can be reduced while some adaptation to the user's situation and profile may still be achieved. Multicast groups according to the present solution may be created, for example, based on user age, regional location, income, and/or gender. Thus, during the pooling period the requesting user may be placed into the most suitable group, according to a predefined rule set. If applicable, a user may also belong to more than one multicast group, thus receiving more than one download file.

The present solution enables purchase commands to be issued at different times but the download to occur simultaneously as a multicast.

The present solution may be applied, for example, to mobile advertising. The present solution may increase the efficiency of future advertising-related products. The present solution may also be applied to a mobile broadcast solution which functions as a central content controlling entity in 3G and DVB-H mobile networks. Other possibilities include communications service products that deliver download files with DRM, such as a download/delivery platform (download/deliver server) for music, ring tones, etc.

It should be noted that in connection with the present solution, the term "download(ing)" is used to refer to a group of terminals forming a subgroup and the network multicasting the content based on the terminal-triggered requests. So, the present solution differs from conventional download services. The present solution involves a broadcast/multicast method the efficiency of which comes from multicasting instead of a point-to-point connection that would be typical for conventional download. The multicast is triggered by a terminal requesting a "download" feature, and the service sends it to many terminals at once and becomes therefore an efficient scenario.

Although the present solution has been described above with reference to mobile broadcast radio, such as mobile Internet radio, it should be noted that the present solution may be used in a similar way for providing any other content service, such as mobile television or online gaming. Although the present solution has been described above assuming that radio program is broadcast to the user terminals as a broadcast stream, and that the requested content is then multicast to the requesting user terminals as a downloadable file, the content may be provided by using any suitable broadcast/multicast technique. In this context, the term content or content service may refer to music, audio, video, data, speech and/or any other type of content that can be broadcast/multicast in the system. The content may or may not be protected content (e.g. DRM protected).

The items and steps shown in the figures are simplified and only aim at describing the idea of the present solution. The steps/points, signaling messages and related functions described above in Figures 1 to 5 are in no absolute chronological order, and some of the steps/points may be performed simultaneously or in an order different from the given one. Other functions may also be executed between the steps/points or within the steps/points and other signaling messages sent between the illustrated messages. Some of the steps/points or part of the steps/points can also be left out or integrated together or replaced by a corresponding step/point or part of the step/point. The apparatus operations illustrate a procedure that may be implemented in one or more physical or logical entities. The signaling messages are only exemplary and may even comprise several separate messages for transmitting the same information. The messages serve only as examples and they may contain only some of the information mentioned above. In addition, the messages may also contain other information, and the titles may deviate from those given above. Instead of or in addition to a broadcast multicast service centre, content source node, charging solution node, core network, radio access network, and/or user terminal, the above-described operations may be performed in any other element of a communications system.

In addition to prior art means, a system or system network nodes that implement the functionality of the present solution comprise means for establishing an ad hoc multicast group in a manner described above. Existing network nodes and user terminals comprise processors and memory that may be utilized in the operations of the present solution. Any changes necessary in implementing the present solution may be carried out using supplements or updates of software routines and/or routines included in application-specific integrated circuits (ASIC) and/or programmable circuits, such as EPLDs (electrically programmable logic device) or FPGAs (field programmable gate array).

It will be obvious to a person skilled in the art that as technology advances, the inventive concept can be implemented in various ways. The invention and its embodiments are not limited to the examples described above but may vary within the scope of the claims.

### LIST OF ABBREVIATIONS

- 3GPP: Third generation partnership project
- IP: Internet protocol
- BM-SC: Broadcast multicast service center
- DCF: Digital rights management content format
- PDCF: Packetized DCF
- DRM: Digital rights management
- FLUTE: File delivery over unidirectional transport (RFC 3926)
- IPDC: IP datacast
- MBMS: Multimedia broadcast multicast service
- BCMCS: Broadcast multicast service
- CBMS: Convergence of broadcast and mobile services
- DVB-H: Digital video broadcasting - handheld
- OMA: Open mobile alliance
- RO: Rights object
- BCRO: Broadcast rights object
- SGK: Subscriber group key
- SDP: Session description protocol
- IGMP: Internet group management protocol

## Claims

1. A method of providing a download service in a communications system (S), the method comprising broadcasting content (2-2), which broadcasting the content has a broadcasting duration period, which content can be received by user terminals (UE1, UE2, UE3) in the system (S), and which content is received by at least two user terminals (UE2, UE3), **characterized by** the method further comprising
receiving from a first user terminal (UE2) of said at least two user terminals (UE2, UE3) a first content request (2-3) for the content (2-2) being or having been broadcasted to the first user terminal (UE2) of said at least two user terminals (UE2, UE3), and
receiving from a second user terminal (UE3) of said at least two user terminals (UE2, UE3) a second content request for the content (2-2) being or having been broadcasted to the second user terminal (UE3) of said at least two user terminals (UE2, UE3),
wherein, if the first content request (2-3) has at least one common feature with the second content request, and if the first content request and the second content request are received within a predetermined pooling time period, which comprises said broadcasting duration period plus an eventual additional delay, the method comprises
defining (2-9) a multicast subgroup having a multicast address, wherein the multicast subgroup includes said first and said second user terminal (UE2, UE3); and
transmitting (2-10) common parts of the requested content to the multicast subgroup by utilizing the multicast address.

2. The method according to claim 1, **characterized by**
said first user terminal (UE2) sending a first internet group management protocol (IGMP) join message (2-3) to a broadcast multicast service centre (BM-SC), and
said second user terminal (UE3) sending a second internet group management protocol (IGMP) join message to a broadcast multicast service centre (BM-SC),
wherein the first and the second join message (2-3) indicate a multicast group IP address, and
wherein data necessary for the IGMP join procedure has been broadcast as metadata (2-1) corresponding to said broadcast content (2-2).

3. The method according to claim 1 or 2, **characterized by**
performing, as a response to receiving a content request (2-3), an authorization check on the user terminal; and
including the user terminal in the multicast subgroup, if the user terminal is authorized to receive the requested content.

4. The method according to any one of the claims 1 to 3, **characterized by**
forming a temporary multicast subgroup of user terminals from which content requests directed to similar content are received within a pooling period; and
deleting the temporary multicast subgroup after the related content has been provided to the user terminals.

5. The method according to any one of the claims 1 to 4, **characterized in that** the multicast address is deleted after the related content has been provided to the user terminals.

6. The method as claimed in any one of the preceding claims,
**characterized by** providing a service for downloading at least one of an audio file, music file, video file, data file, speech file, audio stream, music stream, video stream, data stream, speech stream, and protected content to the user term inal.

7. The method as claimed in any one of the preceding claims,
**characterized in that** information on the multicast subgroup is stored for charging purposes.

8. The method as claimed in any one of the preceding claims,
**characterized by** delaying transmission of the requested content until broadcasting of a current song or item is finished and/or until a pooling period is expired.

9. A communications system (S) configured to broadcast content (2-2), which broadcasting the content has a broadcasting duration period, which content can be received by user terminals (UE1, UE2, UE3) in the system (S), and which content is received by at least two user terminals (UE2, UE3), **characterized in that** the system (S) is further configured to
receive from a first user terminal (UE2) of said at least two user terminals (UE2, UE3) a first content request for the content (2-2) being or having been broadcasted to the first user terminal (UE2) of said at least two user terminals (UE2, UE3), and
receive from a second user terminal (UE3) of said at least two user terminals (UE2, UE3) a second content request for content (2-2) being or having been broadcasted to the second user terminal (UE3) of said at least two user terminals (UE2, UE3),
wherein, if the first content request has at least one common feature with the second content request, and if the first and the second content request are received within a predetermined pooling time period, which comprises said broadcasting duration period plus an eventual additional delay, the system is configured to
define a multicast subgroup having a multicast address, wherein the multicast subgroup includes said first and said second user terminal (UE2, UE3); and
transmit common parts of the requested content to the multicast subgroup by utilizing the multicast address.

10. The system according to claim 9, **characterized by**
said first user terminal (UE2) being configured to send a first internet group management protocol (IGMP) join message (2-3) to a broadcast multicast service centre (BM-SC), and
said second user terminal (UE3) being configured to send a second internet group management protocol (IGMP) join message to a broadcast multicast service centre (BM-SC),
wherein the first and the second join message (2-3) indicate a multicast group IP address, and
wherein data necessary for the IGMP join procedure has been broadcast as metadata (2-1) corresponding to said broadcast content (2-2).

11. The system according to claim 9 or 10, **characterized in that** the system (S) is configured to
perform, as a response to receiving a content request, an authorization check on the user terminal (UE2, UE3); and
include the user terminal in the multicast subgroup, if the user terminal (UE2, UE3) is authorized to receive the requested content.

12. The system according to any one of the claims 9 to 11, **characterized in that** the system (S) is configured to
form a temporary multicast subgroup of user terminals (UE2, UE3) from which content requests directed to similar content are received within a pooling period; and
delete the temporary multicast subgroup after the related content has been provided to the user terminals (UE2, UE3).

13. The system according to any one of the claims 9 to 12, **characterized in that** the system (S) is configured to delete the multicast address after the related content has been provided to the user terminals.

14. The system according to any one of the claims 9 to 13, **characterized in that** the system (S) is configured to provide a service for downloading at least one of an audio file, music file, video file, data file, speech file, audio stream, music stream, video stream, data stream, speech stream, and protected content to the user terminal.

15. The system according to any one of the claims 9 to 14, **characterized in that** the system (S) is configured to store information on the multicast subgroup for charging purposes.

16. The system according to any one of the claims 9 to 15, **characterized in that** the system (S) is configured to delay transmission of the requested content until broadcasting of a current song or item is finished and/or until a pooling period is expired.

17. The system according to any one of the claims 9 to 16 comprising a content provider node (BM-SC), wherein the content provider node (BM-SC) is configured to broadcast content (2-2), which can be received by user terminals (UE1, UE2, UE3) in the system (S), and which is received by said at least two user systems (UE2, UE3), **characterized in that** the content provider node (BM-SC) is further configured to
receive a first content request from said first user terminal (UE2) for said broadcast content (2-2) and a second content request for said broadcast content(2-2) from said second user terminal (UE3),
wherein, if the first content request has at least one common feature with the second content request, and if the first and the second content request are received within said predetermined pooling time period, the content provider node (BM-SC) is configured to
define said multicast subgroup having said multicast address, wherein said multicast subgroup includes said first and said second user terminal (UE2, UE3); and
transmit common parts of the requested content to the multicast subgroup by utilizing the multicast address.

18. The system according to claim 17, **characterized in that** said content provider node (BM-SC) is configured to broadcast the data necessary for the IGMP join procedure as metadata (2-1) corresponding to said broadcast content (2-2).

19. The system according to claim 17 or 18, **characterized in that** said content provider node (BM-SC) is configured to perform the system functions defined in any one of the claims 11 to 16.

20. The system according to any one of the claims 9 to 19, **characterized in that** the content provider node (BM-SC) is configured to store information on the multicast subgroup for charging purposes.

21. The system according to any one of the claims 9 to 20, **characterized in that** the content provider node (BM-SC) is a broadcast multicast service centre.

## Patentansprüche

1. Verfahren zum Bereitstellen eines Download-Dienstes in einem Kommunikationssystem (S), wobei das Verfahren das Rundsenden von Content (2-2) umfasst, wobei das Rundsenden des Content eine Rundsendedauerperiode besitzt, wobei der Content von Endgeräten (UE1, UE2, UE3) in dem System (S) empfangen werden kann und wobei der Content von mindestens zwei Endgeräten (UE2, UE3) empfangen wird, **dadurch gekennzeichnet, dass** das Verfahren weiterhin Folgendes umfasst
Empfangen von einem ersten Endgerät (UE2) der mindestens zwei Endgeräte (UE2, UE3) einer ersten Content-Anforderung (2-3) für den Content (2-2), der zu dem ersten Endgerät (UE2) der mindestens zwei Endgeräte (UE2, UE3) rundgesendet wird oder worden ist, und
Empfangen von einem zweiten Endgerät (UE3) der mindestens zwei Endgeräte (UE2, UE3) einer zweiten Content-Anforderung für den Content (2-2), der zu dem zweiten Endgerät (UE3) der mindestens zwei Endgeräte (UE2, UE3) rundgesendet wird oder worden ist,
wobei, falls die erste Content-Anforderung (2-3) mindestens ein gemeinsames Merkmal mit der zweiten Content-Anforderung besitzt und falls die erste Content-Anforderung und die zweite Content-Anforderung innerhalb einer vorbestimmten Pooling-Zeitperiode empfangen werden, die die Rundsendedauerperiode plus einer eventuellen zusätzlichen Verzögerung umfasst, das Verfahren Folgendes umfasst
Definieren (2-9) einer Multicast-Untergruppe mit einer Multicast-Adresse, wobei die Multicast-Untergruppe das erste und zweite Endgerät (UE2, UE3) enthält; und
Übertragen (2-10) gemeinsamer Teile des angeforderten Content an die Multicast-Untergruppe durch Nutzen der Multicast-Adresse.

2. Verfahren nach Anspruch 1, **dadurch gekennzeichnet, dass**
das erste Endgerät (UE2) eine erste Internet Group Management Protocol(IGMP)-Join-Message (2-3) an ein Broadcast Multicast Service-Center (BM-SC) sendet, und
das zweite Endgerät (UE3) eine zweite Internet Group Management Protocol(IGMP)-Join-Message an ein Broadcast Multicast Service-Center (BM-SC) sendet,
wobei die erste und die zweite Join-Message (2-3) eine Multicast-Gruppe-IP-Adresse angeben, und
wobei die für die IGMP-Join-Prozedur notwendigen Daten als dem rundgesendeten Content (2-2) entsprechende Metadaten (2-1) rundgesendet worden sind.

3. Verfahren nach Anspruch 1 oder 2, **gekennzeichnet durch**
Durchführen, als eine Antwort auf das Empfangen einer Content-Anforderung (2-3), einer Autorisierungsprüfung an dem Endgerät; und
Aufnehmen des Endgeräts in die Multicast-Untergruppe, falls das Endgerät zum Empfangen des angeforderten Content autorisiert ist.

4. Verfahren nach einem der Ansprüche 1 bis 3, **gekennzeichnet durch**
Ausbilden einer temporären Multicast-Untergruppe von Endgeräten, von denen auf ähnlichen Content gerichtete Content-Anforderungen innerhalb einer Pooling-Periode empfangen werden; und
Löschen der temporären Multicast-Untergruppe, nachdem der betreffende Content an die Endgeräte geliefert worden ist.

5. Verfahren nach einem der Ansprüche 1 bis 4, **dadurch gekennzeichnet, dass** die Multicast-Adresse gelöscht wird, nachdem der betreffende Content an die Endgeräte geliefert worden ist.

6. Verfahren nach einem der vorhergehenden Ansprüche,
**gekennzeichnet durch** Bereitstellen eines Dienstes zum Downloaden mindestens einer einer Audiodatei, Musikdatei, Videodatei, Datendatei, Sprachdatei, eines Audiostroms, Musikstroms, Videostroms, Datenstroms, Sprachstroms und geschützten Content an das Endgerät.

7. Verfahren nach einem der vorhergehenden Ansprüche, **dadurch gekennzeichnet, dass** Informationen über die Multicast-Untergruppe zu Gebührenabrechnungszwecken gespeichert werden.

8. Verfahren nach einem der vorhergehenden Ansprüche, **gekennzeichnet durch** das Verzögern der Übertragung des angeforderten Content, bis das Rundsenden eines aktuellen Lieds oder Elements beendet ist und/oder bis eine Pooling-Periode abgelaufen ist.

9. Kommunikationssystem (S), das konfiguriert ist zum Rundsenden von Content (2-2), wobei das Rundsenden des Content eine Rundsendedauerperiode besitzt, wobei der Content von Endgeräten (UE1, UE2, UE3) in dem System (S) empfangen werden kann und wobei der Content von mindestens zwei Endgeräten (UE2, UE3) empfangen wird, **dadurch gekennzeichnet, dass** das System (S) weiterhin konfiguriert ist zum
Empfangen von einem ersten Endgerät (UE2) der mindestens zwei Endgeräte (UE2, UE3) einer ersten Content-Anforderung für den Content (2-2), der zu dem ersten Endgerät (UE2) der mindestens zwei Endgeräte (UE2, UE3) rundgesendet wird oder worden ist, und
Empfangen von einem zweiten Endgerät (UE3) der mindestens zwei Endgeräte (UE2, UE3) einer zweiten Content-Anforderung für den Content (2-2), der zu dem zweiten Endgerät (UE3) der mindestens zwei Endgeräte (UE2, UE3) rundgesendet wird oder worden ist,
wobei, falls die erste Content-Anforderung mindestens ein gemeinsames Merkmal mit der zweiten Content-Anforderung besitzt und falls die erste Content-Anforderung und die zweite Content-Anforderung innerhalb einer vorbestimmten Pooling-Zeitperiode empfangen werden, die die Rundsendedauerperiode plus einer eventuellen zusätzlichen Verzögerung umfasst, das System konfiguriert ist zum
Definieren einer Multicast-Untergruppe mit einer Multicast-Adresse, wobei die Multicast-Untergruppe das erste und zweite Endgerät (UE2, UE3) enthält; und
Übertragen gemeinsamer Teile des angeforderten Content an die Multicast-Untergruppe durch Nutzen der Multicast-Adresse.

10. System nach Anspruch 9, **dadurch gekennzeichnet, dass**
das erste Endgerät (UE2) konfiguriert ist zum Senden einer ersten Internet Group Management Protocol(IGMP)-Join-Message (2-3) an ein Broadcast Multicast Service-Center (BM-SC), und
das zweite Endgerät (UE3) konfiguriert ist zum Senden einer zweiten Internet Group Management Protocol(IGMP)-Join-Message an ein Broadcast Multicast Service-Center (BM-SC),
wobei die erste und die zweite Join-Message (2-3) eine Multicast-Gruppe-IP-Adresse angeben, und
wobei die für die IGMP-Join-Prozedur notwendigen Daten als dem rundgesendeten Content (2-2) entsprechende Metadaten (2-1) rundgesendet worden sind.

11. System nach Anspruch 9 oder 10, **dadurch gekennzeichnet, dass** das System (S) konfiguriert ist zum
Durchführen, als eine Antwort auf das Empfangen einer Content-Anforderung, einer Autorisierungsprüfung an dem Endgerät (UE2, UE3); und
Aufnehmen des Endgeräts in die Multicast-Untergruppe, falls das Endgerät (UE2, UE3) zum Empfangen des angeforderten Content autorisiert ist.

12. System nach einem der Ansprüche 9 bis 11, **dadurch gekennzeichnet, dass** das System (S) konfiguriert ist zum
Ausbilden einer temporären Multicast-Untergruppe von Endgeräten (UE2, UE3), von denen auf ähnlichen Content gerichtete Content-Anforderungen innerhalb einer Pooling-Periode empfangen werden; und
Löschen der temporären Multicast-Untergruppe, nachdem der betreffende Content an die Endgeräte (UE2, UE3) geliefert worden ist.

13. System nach einem der Ansprüche 9 bis 12, **dadurch gekennzeichnet, dass** das System (S) konfiguriert ist zum Löschen der Multicast-Adresse, nachdem der betreffende Content an die Endgeräte geliefert worden ist.

14. System nach einem der Ansprüche 9 bis 13, **dadurch gekennzeichnet, dass** das System (S) konfiguriert ist zum Bereitstellen eines Dienstes zum Downloaden mindestens einer einer Audiodatei, Musikdatei, Videodatei, Datendatei, Sprachdatei, eines Audiostroms, Musikstroms, Videostroms, Datenstroms, Sprachstroms und geschützten Content an das Endgerät.

15. System nach einem der Ansprüche 9 bis 14, **dadurch gekennzeichnet, dass** das System (S) konfiguriert ist zum Speichern von Informationen über die Multicast-Untergruppe für Gebührenabrechnungszwecke.

16. System nach einem der Ansprüche 9 bis 15, **dadurch gekennzeichnet, dass** das System (S) konfiguriert ist zum Verzögern einer Übertragung des angeforderten Content, bis das Rundsenden eines aktuellen Lieds oder Elements beendet ist und/oder bis eine Pooling-Periode abgelaufen ist.

17. System nach einem der Ansprüche 9 bis 16, umfassend einen Content-Provider-Knoten (BM-SC), wobei der Content-Provider-Knoten (BM-SC) konfiguriert ist zum Rundsenden von Content (2-2), der durch Endgeräte (UE1, UE2, UE3) in dem System (S) empfangen werden kann und der durch mindestens zwei Benutzersysteme (UE2, UE3) empfangen wird, **dadurch gekennzeichnet, dass** der Content-Provider-Knoten (BM-SC) weiterhin konfiguriert ist zum
Empfangen einer ersten Content-Anforderung von dem ersten Endgerät (UE2) für den rundgesendeten Content (2-2) und eine zweite Content-Anforderung für den rundgesendeten Content (2-2) von dem zweiten Endgerät (UE3),
wobei, falls die erste Content-Anforderung mindestens ein gemeinsames Merkmal mit der zweiten Content-Anforderung besitzt und falls die erste und die zweite Content-Anforderung innerhalb der vorbestimmten Pooling-Zeitperiode empfangen werden, der Content-Provider-Knoten (BM-SC) konfiguriert ist zum
Definieren einer Multicast-Untergruppe mit einer Multicast-Adresse, wobei die Multicast-Untergruppe das erste und zweite Endgerät (UE2, UE3) enthält; und
Übertragen gemeinsamer Teile des angeforderten Content an die Multicast-Untergruppe durch Nutzen der Multicast-Adresse.

18. System nach Anspruch 17, **dadurch gekennzeichnet, dass** der Content-Provider-Knoten (BM-SC) konfiguriert ist zum Rundsenden der Daten, die für die IGMP-Join-Prozedur notwendig sind, als Metadaten (2-1) entsprechend dem rundgesendeten Content (2-2).

19. System nach Anspruch 17 oder 18, **dadurch gekennzeichnet, dass** der Content-Provider-Knoten (BM-SC) konfiguriert ist zum Durchführen der in einem beliebigen der Ansprüche 11 bis 16 definierten Systemfunktionen.

20. System nach einem der Ansprüche 9 bis 19, **dadurch gekennzeichnet, dass** der Content-Provider-Knoten (BM-SC) konfiguriert ist zum Speichern von Informationen über die Multicast-Untergruppe zu Gebührenabrechnungszwecken.

21. System nach einem der Ansprüche 9 bis 20, **dadurch gekennzeichnet, dass** der Content-Provider-Knoten (BM-SC) ein Broadcast Multicast Service Center ist.

## Revendications

1. Un procédé de fourniture d'un service de téléchargement dans un système de communications (S), le procédé comprenant la radiodiffusion d'un contenu (2-2), ladite radiodiffusion du contenu présentant une durée de radiodiffusion, ledit contenu pouvant être reçu par des terminaux d'utilisateur (UE1, UE2, UE3) dans le système (S), et ledit contenu étant reçu par au moins deux terminaux d'utilisateur (UE2, UE3), **caractérisé en ce que** le procédé comprend en outre
la réception à partir d'un premier terminal d'utilisateur (UE2) desdits au moins deux terminaux d'utilisateur (UE2, UE3) d'une première demande de contenu (2-3) relative au contenu (2-2) qui est ou a été radiodiffusé vers le premier terminal d'utilisateur (UE2) desdits au moins deux terminaux d'utilisateur (UE2, UE3), et
la réception à partir d'un deuxième terminal d'utilisateur (UE3) desdits au moins deux terminaux d'utilisateur (UE2, UE3) d'une deuxième demande de contenu relative au contenu (2-2) qui est ou a été radiodiffusé vers le deuxième terminal d'utilisateur (UE3) desdits au moins deux terminaux d'utilisateur (UE2, UE3),
dans lequel, si la première demande de contenu (2-3) possède au moins une caractéristique commune avec la deuxième demande de contenu et si la première demande de contenu et la deuxième demande de contenu sont reçues à l'intérieur d'une période temporelle de regroupement prédéterminée qui comprend ladite durée de radiodiffusion plus un délai additionnel final, le procédé comprend
la définition (2-9) d'un sous-groupe de multidiffusion possédant une adresse de multidiffusion, le sous-groupe de multidiffusion comprenant ledit premier et ledit deuxième terminal d'utilisateur (UE2, UE3), et
la transmission (2-10) de parties communes du contenu demandé vers le sous-groupe de multidiffusion au moyen de l'adresse de multidiffusion.

2. Le procédé selon la revendication 1, **caractérisé par**
l'envoi par ledit premier terminal d'utilisateur (UE2) d'un premier message de ralliement de protocole de gestion de groupe Internet (IGMP) (2-3) à un centre de services de multidiffusion radiodiffusion (BM-SC), et
l'envoi par ledit deuxième terminal d'utilisateur (UE3) d'un deuxième message de ralliement de protocole de gestion de groupe Internet (IGMP) à un centre de services de multidiffusion radiodiffusion (BM-SC),
dans lequel le premier et le deuxième message de ralliement (2-3) indiquent une adresse IP de groupe de multidiffusion, et
dans lequel des données nécessaires à la procédure de ralliement IGMP ont été radiodiffusées sous la forme de métadonnées (2-1) correspondant audit contenu radiodiffusé (2-2) .

3. Le procédé selon la revendication 1 ou 2, **caractérisé par**
l'exécution, en tant que réponse à la réception d'une demande de contenu (2-3), d'un contrôle d'autorisation sur le terminal d'utilisateur, et
l'inclusion du terminal d'utilisateur dans le sous-groupe de multidiffusion si le terminal d'utilisateur est autorisé à recevoir le contenu demandé.

4. Le procédé selon l'une quelconque des revendications 1 à 3, **caractérisé par**
la formation d'un sous-groupe de multidiffusion temporaire de terminaux d'utilisateur à partir duquel des demandes de contenu dirigées vers un contenu similaire sont reçues à l'intérieur d'une période de regroupement, et
la suppression du sous-groupe de multidiffusion temporaire après la fourniture du contenu relatif aux terminaux d'utilisateur.

5. Le procédé selon l'une quelconque des revendications 1 à 4, **caractérisé en ce que** l'adresse de multidiffusion est supprimée après la fourniture du contenu relatif aux terminaux d'utilisateur.

6. Le procédé selon l'une quelconque des revendications précédentes, **caractérisé par** la fourniture d'un service destiné au téléchargement d'au moins un élément parmi un fichier audio, un fichier musical, un fichier vidéo, un fichier de données, un fichier vocal, un flux audio, un flux musical, un flux vidéo, un flux de données, un flux vocal et un contenu protégé au terminal d'utilisateur.

7. Le procédé selon l'une quelconque des revendications précédentes, **caractérisé en ce que** des informations relatives au sous-groupe de multidiffusion sont conservées en mémoire à des fins de facturation.

8. Le procédé selon l'une quelconque des revendications précédentes, **caractérisé par** le report de la transmission du contenu demandé jusqu'à la fin de la radiodiffusion d'une chanson ou d'un élément en cours et/ou jusqu'à l'expiration d'une période de regroupement.

9. Un système de communications (S) configuré de façon radiodiffuser un contenu (2-2), ladite radiodiffusion du contenu possédant une durée de radiodiffusion, ledit contenu pouvant être reçu par des terminaux d'utilisateur (UE1, UE2, UE3) dans le système (S), et ledit contenu étant reçu par au moins deux terminaux d'utilisateur (UE2, UE3), **caractérisé en ce que** le système (S) est configuré en outre de façon à
recevoir à partir d'un premier terminal d'utilisateur (UE2) desdits au moins deux terminaux d'utilisateur (UE2, UE3) une première demande de contenu relative au contenu (2-2) qui est ou a été radiodiffusé vers le premier terminal d'utilisateur (UE2) desdits au moins deux terminaux d'utilisateur (UE2, UE3), et
recevoir à partir d'un deuxième terminal d'utilisateur (UE3) desdits au moins deux terminaux d'utilisateur (UE2, UE3) une deuxième demande de contenu relative au contenu (2-2) qui est ou a été radiodiffusé vers le deuxième terminal d'utilisateur (UE3) desdits au moins deux terminaux d'utilisateur (UE2, UE3),
dans lequel, si la première demande de contenu possède au moins une caractéristique commune avec la deuxième demande de contenu et si la première et la deuxième demande de contenu sont reçues à l'intérieur d'une période temporelle de regroupement prédéterminée, qui comprend ladite durée de radiodiffusion plus un délai additionnel final, le système est configuré de façon à
définir un sous-groupe de multidiffusion possédant une adresse de multidiffusion, le sous-groupe de multidiffusion comprenant ledit premier et ledit deuxième terminal d'utilisateur (UE2, UE3), et
transmettre des parties communes du contenu demandé vers le sous-groupe de multidiffusion au moyen de l'adresse de multidiffusion.

10. Le système selon la revendication 9, **caractérisé en ce que**
ledit premier terminal d'utilisateur (UE2) est configuré de façon à envoyer un premier message de ralliement de protocole de gestion de groupe Internet (IGMP) (2-3) à un centre de services de multidiffusion radiodiffusion (BM-SC), et
ledit deuxième terminal d'utilisateur (UE3) est configuré de façon à envoyer un deuxième message de ralliement de protocole de gestion de groupe Internet (IGMP) à un centre de services de multidiffusion radiodiffusion (BM-SC),
dans lequel le premier et le deuxième message de ralliement (2-3) indiquent une adresse IP de groupe de multidiffusion, et
dans lequel des données nécessaires à la procédure de ralliement IGMP ont été radiodiffusées sous la forme de métadonnées (2-1) correspondant audit contenu radiodiffusé (2-2) .

11. Le système selon la revendication 9 ou 10, **caractérisé en ce que** le système (S) est configuré de façon à
exécuter, en tant que réponse à la réception d'une demande de contenu, un contrôle d'autorisation sur le terminal d'utilisateur (UE2, UE3), et
inclure le terminal d'utilisateur dans le sous-groupe de multidiffusion si le terminal d'utilisateur (UE2, UE3) est autorisé à recevoir le contenu demandé.

12. Le système selon l'une quelconque des revendications 9 à 11, **caractérisé en ce que** le système (S) est configuré de façon à
former un sous-groupe de multidiffusion temporaire de terminaux d'utilisateur (UE2, UE3) à partir duquel des demandes de contenu dirigées vers un contenu similaire sont reçues à l'intérieur d'une période de regroupement, et
supprimer le sous-groupe de multidiffusion temporaire après la fourniture du contenu relatif aux terminaux d'utilisateur (UE2, UE3).

13. Le système selon l'une quelconque des revendications 9 à 12, **caractérisé en ce que** le système (S) est configuré de façon à supprimer l'adresse de multidiffusion après la fourniture du contenu relatif aux terminaux d'utilisateur.

14. Le système selon l'une quelconque des revendications 9 à 13, **caractérisé en ce que** le système (S) est configuré de façon à fournir un service destiné au téléchargement d'au moins un élément parmi un fichier audio, un fichier musical, un fichier vidéo, un fichier de données, un fichier vocal, un flux audio, un flux musical, un flux vidéo, un flux de données, un flux vocal et un contenu protégé au terminal d'utilisateur.

15. Le système selon l'une quelconque des revendications 9 à 14, **caractérisé en ce que** le système (S) est configuré de façon à conserver en mémoire des informations relatives au sous-groupe de multidiffusion à des fins de facturation.

16. Le système selon l'une quelconque des revendications 9 à 15, **caractérisé en ce que** le système (S) est configuré de façon à reporter la transmission du contenu demandé jusqu'à la fin de la radiodiffusion d'une chanson ou d'un élément en cours et/ou jusqu'à l'expiration d'une période de regroupement.

17. Le système selon l'une quelconque des revendications 9 à 16 comprenant un noeud de fournisseur de contenus (BM-SC), dans lequel le noeud de fournisseur de contenus (BM-SC) est configuré de façon à radiodiffuser un contenu (2-2), qui peut être reçu par des terminaux d'utilisateur (UE1, UE2, UE3) dans le système (S), et qui est reçu par lesdits au moins deux systèmes d'utilisateur (UE2, UE3), **caractérisé en ce que** le noeud de fournisseur de contenus (BM-SC) est configuré en outre de façon à
recevoir une première demande de contenu à partir dudit premier terminal d'utilisateur (UE2) relative audit contenu radiodiffusé (2-2) et une deuxième demande de contenu relative audit contenu radiodiffusé(2-2) à partir dudit deuxième terminal d'utilisateur (UE3),
dans lequel, si la première demande de contenu possède au moins une caractéristique commune avec la deuxième demande de contenu et si la première et la deuxième demande de contenu sont reçues à l'intérieur de ladite période temporelle de regroupement prédéterminée, le noeud de fournisseur de contenus (BM-SC) est configuré de façon à
définir ledit sous-groupe de multidiffusion possédant ladite adresse de multidiffusion, ledit sous-groupe de multidiffusion comprenant ledit premier et ledit deuxième terminal d'utilisateur (UE2, UE3), et
transmettre des parties communes du contenu demandé au sous-groupe de multidiffusion au moyen de l'adresse de multidiffusion.

18. Le système selon la revendication 17, **caractérisé en ce que** ledit noeud de fournisseur de contenus (BM-SC) est configuré de façon à radiodiffuser les données nécessaires à la procédure de ralliement IGMP sous la forme de métadonnées (2-1) correspondant audit contenu radiodiffusé (2-2).

19. Le système selon la revendication 17 ou 18, **caractérisé en ce que** ledit noeud de fournisseur de contenus (BM-SC) est configuré de façon à exécuter les fonctions système définies dans l'une quelconque des revendications 11 à 16.

20. Le système selon l'une quelconque des revendications 9 à 19, **caractérisé en ce que** le noeud de fournisseur de contenus (BM-SC) est configuré de façon à conserver en mémoire des informations relatives au sous-groupe de multidiffusion à des fins de facturation.

21. Le système selon l'une quelconque des revendications 9 à 20, **caractérisé en ce que** le noeud de fournisseur de contenus (BM-SC) est un centre de services de multidiffusion radiodiffusion.
